# EUROPÄISCHE PATENTSCHRIFT

(11) **EP 3 196 434 B1**
(45) Veröffentlichungstag und Bekanntmachung des Hinweises auf die Patenterteilung: **06.02.2019**
(21) Anmeldenummer: 16207380.3
(22) Anmeldetag: 29.12.2016
(51) Int. Cl.: F01N 3/28, F01N 3/20, B01F 5/00

(54) **SCR-ABGASNACHBEHANDLUNGSANORDNUNG**
SCR WASTE GAS TREATMENT ASSEMBLY
SCR SYSTÈME DE POST-TRAITEMENT DE GAZ D'ÉCHAPPEMENT

(30) Priorität: 21.01.2016 DE 102016101055
(43) Veröffentlichungstag der Anmeldung: 26.07.2017
(73) Patentinhaber: Benteler Automobiltechnik GmbH, 33102 Paderborn (DE)
(72) Erfinder: König, Tobias, 59872 Meschede (DE); Lewin, Eugen, 33106 Paderborn (DE); Grußmann, Elmar, 33184 Altenbeken (DE); Grumbrecht, Frank, 13469 Berlin (DE); Römer, Tobias, 38644 Goslar (DE); Franzke, Anne, 09113 Chemnitz (DE)
(74) Vertreter: Griepenstroh, Jörg

(56) Entgegenhaltungen:
- EP-A1- 2 535 535
- WO-A1-2012/089290
- DE-A1-102008 017 395
- DE-A1-102008 029 110
- DE-A1-102011 111 765
- DE-A1-102016 102 020
- US-A1- 2008 060 712
- US-A1- 2012 204 541

## Beschreibung

Die vorliegende Erfindung betrifft eine SCR-Abgasnachbehandlungsanordnung für eine Verbrennungskraftmaschine gemäß den Merkmalen im Oberbegriff von Patentanspruch 1.

In Kraftfahrzeugen werden Verbrennungskraftmaschinen eingesetzt, um die im Kraftstoff enthaltene chemische Energie durch den Verbrennungsprozess in mechanische Energie zum Antrieb des Kraftfahrzeuges umzusetzen. Dabei werden bedingt durch den idealen Carnot-Prozess circa 40 % der im Kraftstoff enthaltenen Energie in mechanische Energie umgewandelt, die restliche im Kraftstoff enthaltene Energie wird in Wärme umgewandelt und es entstehen beim Verbrennungsprozess Abgase. Diese Abgase enthalten unter anderem Stickoxide (NO, NO2).

Aus dem Stand der Technik hat sich in den letzten Jahren insbesondere auch im Automobilbau die Selektive Katalytische Reduktion (SCR) etabliert, bei welcher ein Reduktionsmittel dem Abgas zugemischt wird und dabei selektiv Stickoxide reduziert werden und unerwünschte Nebenreaktionen wie Oxidation von Schwefeldioxid zu Schwefeltrioxid unterdrückt werden.

Als Reduktionsmittel wird dabei üblicherweise Ammoniak verwendet. Im Kraftfahrzeugbau wird dies als wässrige Harnstofflösung bereitgestellt und ist unter anderem unter der eingetragenen Marke AdBlue bekannt. Insbesondere ist es ein Ziel, durch die Selektive Katalytische Reduktion, welche auch als Harnstoffeinspritzung bekannt ist, bei Dieselmotoren die Stickoxidemission zu senken.

Das dem Abgasstrom beigemischte Reduktionsmittel muss mit dem Abgasstrom durchmischt werden. Das Reduktionsmittel selbst wird oftmals mit einem Injektor in den Abgasstrom eingespritzt bzw. eingedüst. Dabei entstehen für typische Injektoren ausgeprägte Schnurstrahlen mit relativ großen und stabilen Einzeltröpfchen.

Um nunmehr eine gute Durchmischung von Abgasstrom und eingedüstem Reduktionsmittel zu erreichen, sind aus dem Stand der Technik Mischelemente bekannt, die einen Drall erzeugen, um eine Relativbewegung zwischen dem Abgasstrom und dem Reduktionsmittel herbeizuführen. Dadurch wird insbesondere die Tropfenflugbahn des eingedüsten Reduktionsmittels verlängert und damit die Verdampfungsneigung erhöht und eine bessere Durchmischung herbeigeführt.

Beispielsweise ist aus der DE 10 2012 224 198 A1 eine Mischeinrichtung bekannt, bei der in Strömungsrichtung aufeinanderfolgend eine erste Drallkomponente angeordnet ist und im Anschluss daran eine Gegendrallkomponente. Hierdurch wird zugleich auch der Abgasgegendruck erhöht. Diese Erhöhung des Abgasgegendruckes ist jedoch unerwünscht, da sich dies negativ auf die Effizienz der Verbrennungskraftmaschine auswirkt.

Ferner ist aus der DE 10 2008 029 110 A1 eine SCR -Abgasnachbehandlungsanordnung bekannt, die zum Eindüsen eines Reduktionsmittels eine Mischeinrichtung, sowie einen in Abgasströmungsrichtung angeordneten SCR-Katalysator aufweist. Das eingedüste Reduktionsmittel wird vor der Mischeinrichtung in axialer Richtung in den Abgasstrang eingedüst.

Nach der Durchmischung des Abgasstroms mit dem Reduktionsmittel tritt dieser dann in einen in Strömungsrichtung nachfolgenden SCR-Katalysator ein. Der Stelle der Injektion des Abgasstromes mit dem Reduktionsmittel ist zumeist noch ein Oxidationskatalysator vorgeschaltet.

Aufgabe der vorliegenden Erfindung ist es, ausgehend vom Stand der Technik, eine SCR-Abgasnachbehandlungsanordnung bereitzustellen, die einen geringen Abgasgegendruck aufweist, zugleich jedoch eine besonders gute Durchmischung von Abgasstrom und Reduktionsmittel bereitstellt bei kostengünstiger Herstellung und geringem konstruktiven Aufwand.

Die zuvor genannte Aufgabe wird erfindungsgemäß mit einer SCR-Abgasnachbehandlungsanordnung mit den Merkmalen im Patentanspruch 1 gelöst.

Vorteilhafte Ausgestaltungsvarianten sind in den abhängigen Patentansprüchen beschrieben.

Die erfindungsgemäße SCR-Abgasnachbehandlungsanordnung einer Verbrennungskraftmaschine weist einen Injektor zum Eindüsen eines Reduktionsmittels sowie eine Mischeinrichtung und einen in Abgasströmungsrichtung folgend angeordneten Katalysator, insbesondere SCR-Katalysator, auf und zeichnet sich erfindungsgemäß dadurch aus, dass die Mischeinrichtung ein Drallelement aufweist und ein in Abgasströmungsrichtung dem Drallelement vorgeschaltetes separates Prallelement. Das Drallelement ist aus zwei ineinander angeordneten Leitelementen ausgebildet, wobei in einem inneren Leitelement Drallschaufeln zur Erzeugung einer Drallbewegung angeordnet sind und zwischen dem inneren Leitelement und dem äußeren Leitelement Drallschaufeln angeordnet sind, die eine Gegendrallbewegung erzeugen.

Somit wird eine konstruktive Entkoppelung der Funktion mechanischer Sprayaufbruch und Drallerzeugung umgesetzt. Jedoch sind wiederum dadurch, dass das Drallelement und das Prallelement in einer Mischeinrichtung bzw. einer Mischkomponente integriert sind, eine vorteilhafte Fertigung und einfache Integration in das Abgassystem sichergestellt.

Dadurch, dass das Prallelement separat ausgebildet ist, kann dieses jedoch mit dem Drallelement verbunden werden und es ist möglich, das Prallelement auf die Anforderung des Injektors und insbesondere die Strahlform des Reduktionsmittels optimal auszulegen, so dass die Funktion des Sprayaufbruchs über einen weiten Betriebsbereich der Verbrennungskraftmaschine hinreichend erfüllt wird.

Die Funktion der Drallerzeugung kann somit unabhängig von der Funktion des Sprayaufbruchs durch Änderung der konstruktiven Parameter, insbesondere der Drallschaufeln, an die Erfordernisse der in Strömungsrichtung des Abgases stromabwärts folgenden Geometrie angepasst werden.

Insbesondere durch den erfindungsgemäßen Ansatz, dass bezogen auf die Strömungsrichtung gleichzeitig für einen Teilstrom des Abgases eine Drallbewegung und für den verbleibenden Teilstrom des Abgases eine Gegendrallbewegung erzeugt wird, findet eine besonders gute Durchmischung von Abgas und Reduktionsmittel statt, in einem in Strömungsrichtung gesehen kurzen Eingangstrichter eines Katalysators. Es wird eine gleichmäßige und gute Durchmischung von Abgasstrom und insbesondere verdampftem Reduktionsmittel erzeugt, so dass diese bei Eintritt in den Monolith eines Katalysators optimal für die darin erfolgende Abgasnachbehandlung durchmischt sind. Hierzu ist erfindungsgemäß insbesondere vorgesehen, dass der gesamte Abgasstrom durch das Drallelement hindurchtritt. Die Leitelemente des Drallelements sind bevorzugt als Hülsen ausgebildet. Dabei tritt ein Teil des Abgasstromes durch die innere Hülse und der verbleibende Teil durch den Raum zwischen innerer Hülse und äußerer Hülse hindurch. Die Drallbewegung und die Gegendrallbewegung werden somit nicht hintereinander jeweils für den gesamten Abgasstrom erzeugt, sondern im Wesentlichen zeitgleich jeweils für den jeweiligen Teil des Abgasstromes.

Drallbewegung und Gegendrallbewegung sorgen nach Durchtritt des Abgasstroms und Reduktionsmittels durch das Drallelemente für eine zusätzliche Turbulenz und damit bessere Durchmischung. Hierzu sind die Drallschaufeln zur Erzeugung der Drallbewegung und die Drallschaufeln zur Erzeugung der Gegendrallbewegung bezogen auf die Abgasströmungsrichtung auf im Wesentlichen gleicher Höhe und/oder nebeneinander bzw. parallel angeordnet. Dies bedeutet im Sinne der Erfindung, dass der Abgasstrom, der durch die Drallschaufeln zur Erzeugung der Drallbewegung durchtritt, dies in etwa zum gleichen Zeitpunkt vollzieht, in dem der andere Teil des Abgasstroms zur Erzeugung der Gegendrallbewegung das Drallelement durchströmt. Insbesondere bedeutet dies, dass nicht Drallbewegung und Gegendrallbewegung nacheinander bzw. hintereinander erzeugt werden, ganz besonders bevorzugt nicht für jeweils den gesamten Abgasstrom. Im Sinne der Erfindung ist auf gleicher Höhe mit wenigen Millimetern Versatz in Axialrichtung des Drallelementes zwischen den Drallschaufeln der Drallbewegung und den Drallschaufeln der Gegendrallbewegung ebenfalls zu verstehen.

Das Drallelement selbst ist besonders bevorzugt in Abgasströmungsrichtung blickdicht ausgebildet. Dies bedeutet, dass bei Betrachtung des Drallelementes in dessen Axialrichtung keine Öffnungen zum Durchtritt bzw. zur Durchführung des Abgases ersichtlich sind. Erst bei Betrachtung in einem Winkel sind aufgrund der Winkellage der Drallschaufeln Durchtrittsöffnungen ersichtlich.

Das gesamte die Abgasnachbehandlungsanordnung durchströmende Abgas strömt somit durch das Drallelement. Ein Teil des Abgasstromes strömt dabei durch das innere Leitelement, bevorzugt die innere Hülse und der verbleibende Teil durch den Raum zwischen innerem Leitelement und äußerem Leitelement, bevorzugt äußerer Hülse. Besonders bevorzugt ist das innere Leitelement, insbesondere die innere Hülse, konzentrisch in dem äußeren Leitelement, insbesondere der äußeren Hülse, angeordnet. Sie kann jedoch auch exzentrisch versetzt in dieser angeordnet sein. Die Hülsen können einen runden, aber auch ovalen oder andersartigen Querschnitt aufweisen.

Dem Drallelement vorgeschaltet ist in Abgasströmungsrichtung das Prallelement angeordnet. Insbesondere ist das Prallelement auf einer axialen Achse mit dem Drallelement angeordnet. Das Prallelement ist besonders bevorzugt als Blechbauteil, insbesondere als Blechumformbauteil, ganz besonders bevorzugt als einstückiges und werkstoffeinheitliches Blechumformbauteil ausgebildet. Das Prallelement ist unmittelbar mit dem Drallelement gekoppelt. Dazu ist das Prallelement auf das Drallelement aufgesteckt und besonders bevorzugt weiterhin stoffschlüssig mit diesem gekoppelt.

Das Prallelement weist besonders bevorzugt mindestens zwei Prallflächen auf, bevorzugt drei Prallflächen. Die Anzahl der Prallflächen ist jedoch insbesondere durch die Anzahl der Einspritzstrahlen des in den Injektor eingespritzten bzw. eingedüsten Injektionsmittels bestimmt. Wenn somit beispielsweise 4, 5 oder 6 Einspritzstrahlen eingespritzt werden, sind bevorzugt auch 4, 5 oder 6 Prallflächen ausgebildet. Die Prallflächen können auch als Prallplatten benannt werden.

Die Prallflächen sind insbesondere in Radialrichtung bezogen aufeinander nach innen zu zeigend angeordnet und bezogen auf die Abgasströmungsrichtung abgewinkelt zu dieser angeordnet. Der Winkel α ist bevorzugt für jede Prallfläche individuell ausgestaltet. Dieser liegt bevorzugt zwischen 30° und 60°, insbesondere zwischen 35° und 55°, besonders bevorzugt zwischen 40° und 50°. Die eingedüsten Strahlen prallen somit auf die Prallfläche und werden derart in kleineren Tröpfchen zerschlagen und umgeleitet, so dass diese sich maßgeblich in Radialrichtung ausbreitend verteilen und dann von dem Abgasstrom mitgenommen werden.

Hierzu ist der Injektor dem Prallelement besonders bevorzugt in Axialrichtung des Drallelementes vorgeschaltet, so dass ein jeweiliger Injektionsstrahl, insbesondere im Wesentlichen in Axialrichtung des Drallelementes, auf das Prallelement auftrifft. Dies bedeutet, dass der Injektionsstrahl parallel orientiert zur Axialrichtung des Drallelementes verlaufend eingespritzt und nach dem Einspritzen bis zum Auftreffen auf die Prallfläche orientiert verläuft. Im Sinne der Erfindung ist dabei ein Winkel von kleiner als 15°, insbesondere kleiner 7° und besonders bevorzugt kleiner als 5° zur Axialrichtung zu verstehen. Besonders bevorzugt ist der Injektionsstrahl mit einem Winkel von 0° bis 5° zur Axialrichtung des Drallelementes verlaufend.

Weiterhin besonders bevorzugt ist die äußere Hülse des Drallelementes als Verbindungselement eines SCR-Katalysators mit einer dem SCR-Katalysator vorgeschalteten Abgasrohrführung verwendet, insbesondere eingesetzt. Insbesondere ist die äußere Hülse als innere Verbindungsmuffe oder Verbindungsmanschette ausgebildet.

Die Erfindung betrifft weiterhin ein Verfahren zum Betreiben der erfindungsgemäßen SCR- Abgasnachbehandlungsanordnung.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1: eine SCR-Abgasnachbehandlungsanordnung in perspektivischer Ansicht,
- Figur 2a - c: eine erfindungsgemäße Mischeinrichtung,
- Figur 3: eine erfindungsgemäße Mischeinrichtung in Explosivdarstellung und
- Figur 4: die SCR-Abgasnachbehandlungsanordnung aus Figur 1 in Schnittansicht.

In den Figuren werden für gleiche oder ähnliche Bauteile dieselben Bezugszeichen verwendet, auch wenn eine wiederholte Beschreibung aus Vereinfachungsgründen entfällt. Die Leitelemente sind als Hülsen beschrieben, können jedoch auch eine andere geometrische Ausgestaltung aufweisen.

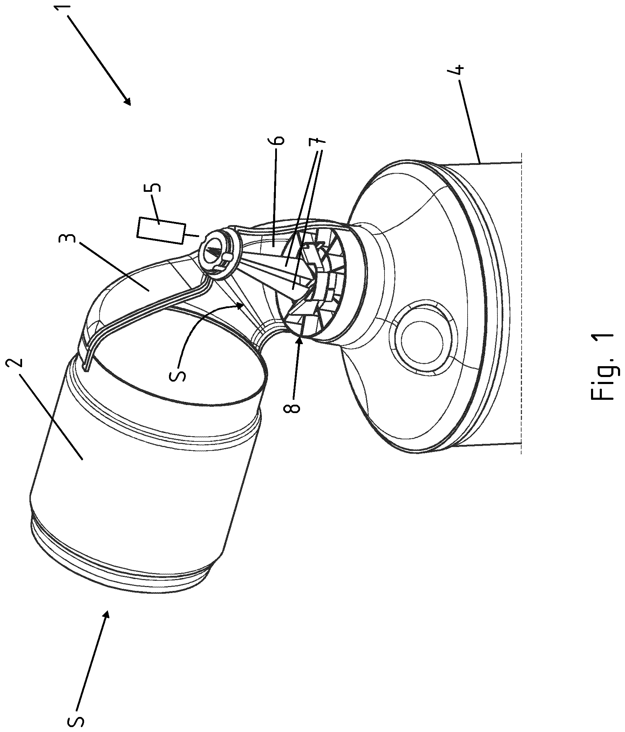

Figur 1 zeigt eine perspektivische Ansicht einer SCR-Abgasnachbehandlungsanordnung 1. Hierzu ist eine erste Komponente 2, beispielsweise ein Oxidationskatalysator, dargestellt, auf den in Abgasströmungsrichtung S ein Verbindungselement 3 folgt, durch welchen die Abgasströmung durchtritt. Dem Verbindungselement 3 folgt ein SCR-Katalysator 4.

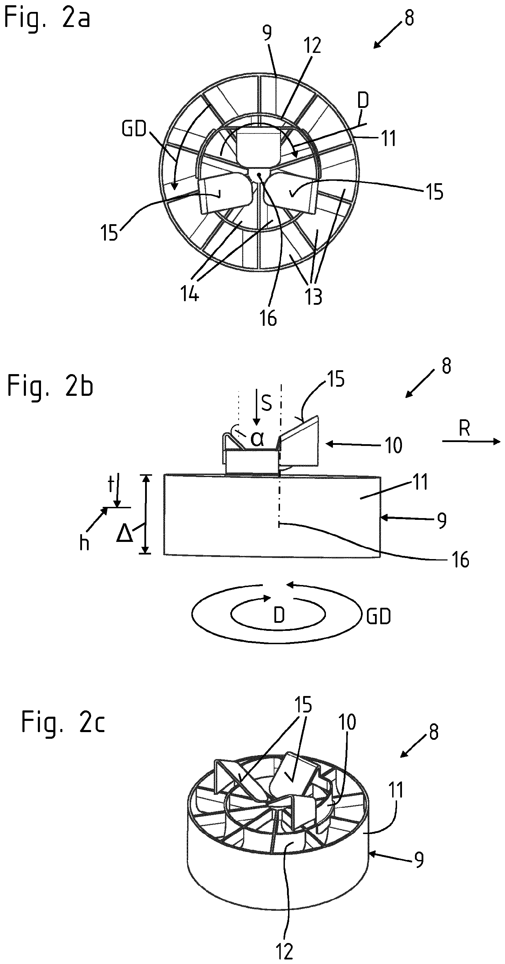

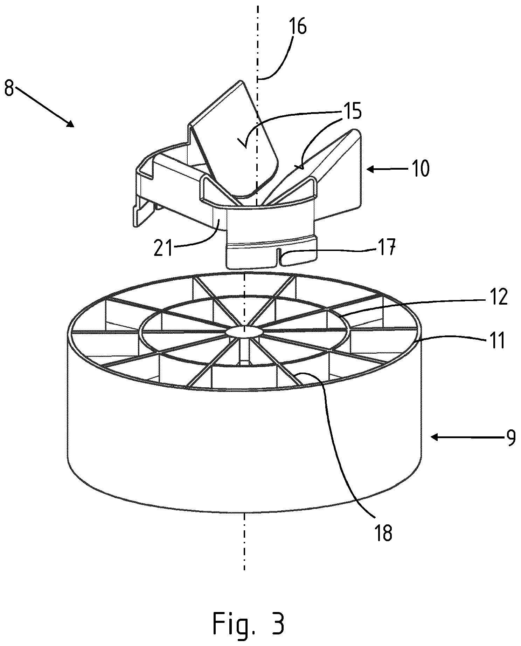

An dem Verbindungselement 3 ist ein Injektor 5, der in den Innenraum 6 des Verbindungselementes 3 Injektionsstrahlen 7 eines Reduktionsmittels injiziert bzw. eindüst. In einem Übergang von Verbindungselement 3 zu SCR-Katalysator 4 ist eine Mischeinrichtung 8 angeordnet, welche in Figur 2a bis c und Figur 3 nähergehend beschrieben wird.

Die Mischeinrichtung 8 weist ein Drallelement 9 und ein Prallelement 10 auf. Das Prallelement 10 ist bezogen auf die Abgasströmungsrichtung S dem Drallelement 9 vorgeschaltet. Das Drallelement 9 weist eine äußere Hülse 11 und eine darin angeordnete innere Hülse 12 auf. Zwischen der inneren Hülse 12 und der äußeren Hülse 11 sind Drallschaufeln 13 angeordnet, die bei Durchtritt eines Teils des Abgasstromes 19 eine Gegendrallbewegung GD erzeugen. Die Gegendrallbewegung GD bezieht sich dabei auf eine durch in der inneren Hülse 12 angeordnete Drallschaufeln 14 erzeugte Drallbewegung D. Die Drallbewegung D wird bei Durchtritt des anderen Teil des Abgasstroms durch die innere Hülse 12 erzeugt. Die Richtungen von Drallbewegung D und Gegendrallbewegung GD können auch denen der Skizze entgegengesetzt sein.

Somit wird der gesamte Abgasstrom durch die Mischeinrichtung 8 hindurchgeführt, da bei Durchtritt ein Teil des Abgasstromes 19 die innere Hülse 12 und der verbleibende Teil des Abgasstromes in den Raum zwischen innerer Hülse 12 und äußerer Hülse 11 hindurchtritt. Der Teil, der durch die innere Hülse 12 tritt, wird dabei durch die Drallelemente 14 in der inneren Hülse 12 in eine Drallbewegung D versetzt und der andere Teil, der zeitgleich durch die äußere Hülse 11 tritt, in eine dazu gegenläufige Gegendrallbewegung GD.

Damit jedoch zunächst die Tröpfchen des jeweiligen Injektionsstrahls 7 besser verteilt werden und somit auch besser in dem Abgasstrom verdampfen können, ist in Abgasströmungsrichtung S dem Drallelement 9 vorgeschaltet ein Prallelement 10 angeordnet. Das Prallelement 10 weist Prallflächen 15, hier dargestellt drei Prallflächen 15, auf. Diese korrespondieren mit den drei dargestellten Injektionsstrahlen 7 aus Figur 1. Jeder Injektionsstrahl 7 trifft somit auf eine Prallfläche 15 auf. Die nicht näher dargestellten Injektionsstrahlen 7 verlaufen dabei in einem kleinen Winkel, insbesondere parallel orientiert zu einer Axialrichtung 16 des Drallelementes 9. Die Prallflächen 15 des Prallelementes 10 sind, in Figur 2a dargestellt, in Radialrichtung R aufeinander zu zeigend gerichtet und in Figur 2b dargestellt, bezogen auf die Abgasströmungsrichtung S, in einem Winkel α abgewinkelt angeordnet. Die bei dem Aufprall entstehenden Tröpfchen des Reduktionsmittels werden somit in Radialrichtung R umgelenkt und von der Abgasströmung im Kreuzstromprinzip mitgenommen.

Der Winkel kann für jede Prallfläche 15 individuell optimiert werden. Insbesondere in Figur 3 gut ersichtlich ist, dass das Prallelement 10 als einstückig werkstoffeinheitliches Blechumformbauteil hergestellt ist. Dieses kann beispielsweise Steckschlitze 17 aufweisen, mit welchen es auf in dem Drallelement 9 angeordnete Rippen 18 aufgesteckt werden kann. Die Prallflächen 10 sind durch eine teilweise umlaufende Spange 21 miteinander insbesondere einstückig und werkstoffeinheitlich gekoppelt. Insbesondere ist in Figur 2c das aufgesteckte Prallelement 10 dargestellt. Dies kann zusätzlich stoffschlüssig mit dem Drallelement 9 gekoppelt sein. Es erfolgt jedoch insbesondere eine Funktionstrennung von zunächst Aufbruch des Injektionsstrahls 7 an dem Prallelement 10 mit anschließender Vermischung und Verdampfung in und nach dem Drallelement 9, jeweils bezogen auf die Abgasströmungsrichtung S.

In Figur 2b ist nochmals eingezeichnet eine Zeitachse t bzw. ein Referenzzeichen h für die Höhe. Das in Abgasströmungsrichtung S durch das Drallelement 9 strömende Abgas wird somit zu einem Teil in Drallbewegung D versetzt und mit dem anderen Teil in Gegendrallbewegung GD. Dies geschieht im Wesentlichen zum gleichen Zeitpunkt bzw. auf gleicher Höhe h bezogen auf die Abgasströmungsrichtung S. Ein geringfügiger Versatz zeitlich und/oder bezogen auf die Höhe h vor- oder nachgeschaltet ist mit Δ dargestellt und stellt den Erfindungsgedanken dar. Hier wird nochmals ersichtlich, dass nicht zunächst zumindest ein Teil, insbesondere der gesamte Abgasstrom, in eine Drallbewegung D und anschließend in eine Gegendrallbewegung GD versetzt wird, sondern beides gleichzeitig geschieht.

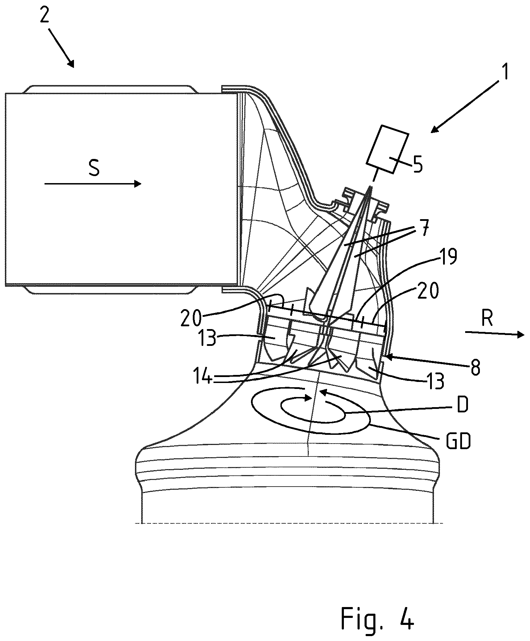

Ebenfalls ist dies nochmals dargestellt in Figur 4. Figur 4 zeigt eine Querschnittsansicht durch die erfindungsgemäße SCR-Abgasnachbehandlungsanordnung 1, bei welcher ein Teil des Abgasstroms 19 durch die innere Hülse 12 des Drallelements 9 strömt und der andere Teil 20 zwischen innerer Hülse 12 und äußerer Hülse 11 die Mischeinrichtung 8 durchströmt. Mithin wird eine, bezogen auf die Abgasströmungsrichtung S, zeitgleiche Versetzung des gesamten Abgasstromes 19, 20 in Drallbewegung D und Gegendrallbewegung GD erzeugt, was bezogen auf die Abgasströmungsrichtung S der Mischeinrichtung 8 nachgeschaltet zu einer erhöhten Turbulenz und damit besseren Durchmischung und Verdampfung von Abgasstrom und Reduktionsmittel führt.

### Bezugszeichen:

- 1: - SCR-Abgasnachbehandlungsanordnung
- 2: - erste Komponente
- 3: - Verbindungselement
- 4: - SCR-Katalysator
- 5: - Injektor
- 6: - Innenraum zu 3
- 7: - Injektionsstrahl
- 8: - Mischeinrichtung
- 9: - Drallelement
- 10: - Prallelement
- 11: - äußere Hülse
- 12: - innere Hülse
- 13: - Drallschaufeln in 11
- 14: - Drallschaufeln in 12
- 15: - Prallfläche
- 16: - Axialrichtung zu 9
- 17: - Steckschlitz
- 18: - Rippen
- 19: - Teil des Abgasstromes
- 20: - anderer Teil des Abgasstromes
- 21: - Spange

- D: - Drallbewegung
- GD: - Gegendrallbewegung
- R: - Radialrichtung
- S: - Abgasströmungsrichtung
- t: - Zeitachse
- h: - Höhe
- Δ: - Versatz

## Patentansprüche

1. SCR-Abgasnachbehandlungsanordnung (1) einer Verbrennungskraftmaschine, aufweisend einen Injektor (5) zum Eindüsen eines Reduktionsmittels sowie eine Mischeinrichtung (8) und einen in Abgasströmungsrichtung (S) nachfolgend angeordneten SCR-Katalysator (4), wobei die Mischeinrichtung (8) ein Drallelement (9) aufweist, und wobei das Drallelement (9) aus zwei ineinander angeordneten Leitelementen ausgebildet ist und in einem inneren Leitelement Drallschaufeln (14) zur Erzeugung einer Drallbewegung (D) angeordnet sind und zwischen dem inneren Leitelement und dem äußeren Leitelement Drallschaufeln (13) angeordnet sind, die eine Gegendrallbewegung (GD) erzeugen, **dadurch gekennzeichnet, dass** die Mischeinrichtung (8) ein in Abgasströmungsrichtung (S) dem Drallelement (9) vorgeschaltetes Prallelement (10) aufweist, wobei das Prallelement (10) auf das Drallelement (9) aufgesteckt ist.

2. SCR-Abgasnachbehandlungsanordnung nach Anspruch 1, **dadurch gekennzeichnet, dass** die Leitelemente als innere Hülse (12) und äußere Hülse (11) ausgebildet sind.

3. SCR-Abgasnachbehandlungsanordnung nach Anspruch 1 oder 2, **dadurch gekennzeichnet, dass** die Drallschaufeln (14) zur Erzeugung der Drallbewegung (D) und die Drallschaufeln (13) zur Erzeugung der Gegendrallbewegung (GD) bezogen auf die Abgasströmungsrichtung (S) auf im Wesentlichen gleicher Höhe (h) und/oder nebeneinander angeordnet sind.

4. SCR-Abgasnachbehandlungsanordnung nach einem der Ansprüche 1 bis 3, **dadurch gekennzeichnet, dass** das Drallelement (9) in Abgasströmungsrichtung (S) blickdicht ausgebildet ist und/oder dass das Drallelement (9) einstückig und werkstoffeinheitlich ausgebildet ist.

5. SCR-Abgasnachbehandlungsanordnung nach einem der Ansprüche 1 bis 4, **dadurch gekennzeichnet, dass** das gesamte die Abgasnachbehandlungsanordnung (1) durchströmende Abgas durch das Drallelement (9) strömt.

6. SCR-Abgasnachbehandlungsanordnung nach einem der Ansprüche 1 bis 5, **dadurch gekennzeichnet, dass** das Prallelement (10) als Blechbauteil, insbesondere Blechumformbauteil, ausgebildet ist.

7. SCR-Abgasnachbehandlungsanordnung nach einem der Ansprüche 1 bis 6, **dadurch gekennzeichnet, dass** das Prallelement (10) mindestens zwei Prallflächen (15) aufweist, bevorzugt drei Prallflächen (15).

8. SCR-Abgasnachbehandlungsanordnung nach Anspruch 7, **dadurch gekennzeichnet, dass** die Prallflächen (15) in Radialrichtung (R) aufeinander zu zeigend und in Abgasströmungsrichtung (S) abgewinkelt (a) angeordnet sind.

9. SCR-Abgasnachbehandlungsanordnung nach einem der Ansprüche 1 bis 8, **dadurch gekennzeichnet, dass** das Prallelement (10) mit dem Drallelement (9) stoffschlüssig gekoppelt ist.

10. SCR-Abgasnachbehandlungsanordnung nach einem der Ansprüche 1 bis 9, **dadurch gekennzeichnet, dass** der Injektor (5) dem Prallelement (10) bevorzugt in Axialrichtung (16) des Drallements (9) vorgeschaltet ist, so dass ein Injektionsstrahl (7) insbesondere im Wesentlichen in Axialrichtung (16) des Drallelementes (9) orientiert verläuft und auf das Prallelement (10) auftrifft.

11. SCR-Abgasnachbehandlungsanordnung nach einem der Ansprüche 1 bis 10, **dadurch gekennzeichnet, dass** die äußere Hülse (11) des Drallelementes (9) als Verbindungselement (3) eines SCR Katalysators (4) mit einer dem SCR Katalysator (4) vorgeschalteten Abgasrohrführung verwendet, insbesondere in diese eingesetzt ist.

## Claims

1. SCR (Selective Catalytic Reduction)-exhaust gas after-treatment assembly (1) of an internal combustion engine, having an injector (5) for injecting a reducing agent as well as a mixing device (8) and a SCR-catalytic converter (4) arranged downstream in the exhaust gas flow direction (S), wherein the mixing device (8) has a swirl element (9), and wherein the swirl element (9) is formed from two guide elements arranged one inside the other and swirl blades (14) are arranged in an inner guide element for generating a swirl motion (D) and swirl blades (13) are arranged in the outer guide element, which generate a counter-swirl motion (GD), **characterised in that** the mixing device (8) has an impact element (10) arranged upstream of the swirl element (9) in the exhaust gas flow direction (S), wherein the impact element (10) is placed on the swirl element (9).

2. SCR-exhaust gas after-treatment assembly according to Claim 1, **characterised in that** the guide elements are designed as inner sleeve (12) and outer sleeve (11).

3. SCR-exhaust gas after-treatment assembly according to Claim 1 or 2, **characterised in that** the swirl blades (14) for generating the swirl motion (D) and the swirl blades (13) for generating the counter-swirl motion (GD) are arranged relative to the exhaust gas flow direction (S) at substantially the same height (h) and/or adjacently.

4. SCR-exhaust gas after-treatment assembly according to any one of Claims 1 to 3, **characterised in that** the swirl element (9) is designed in an opaque manner in the exhaust gas flow direction (S) and/or that the swirl element (9) is designed in one piece and of a uniform material.

5. SCR-exhaust gas after-treatment assembly according to any one of Claims 1 to 4, **characterised in that** the entire exhaust gas flowing through the exhaust gas after-treatment assembly (1) flows through the swirl element (9).

6. SCR-exhaust gas after-treatment assembly according to any one of Claims 1 to 5, **characterised in that** the impact element (10) is designed as a sheet-metal component, in particular, a sheet-metal moulded component.

7. SCR-exhaust gas after-treatment assembly according to any one of Claims 1 to 6, **characterised in that** the impact element (10) has at least two impact surfaces (15), preferably three impact surfaces (15).

8. SCR-exhaust gas after-treatment assembly according to Claim 7, **characterised in that** the impact surfaces (15) are arranged facing each other in the radial direction (R) and angled (a) in the exhaust gas flow direction (S).

9. SCR-exhaust as after-treatment assembly according to any one of Claims 1 to 8, **characterised in that** the impact element (10) is materially coupled with the swirl element (9).

10. SCR-exhaust gas after-treatment assembly according to any one of Claims 1 to 9, **characterised in that** the injector (5) is arranged upstream of the impact element (10) preferably in the axial direction (16) of the swirl element (9), so that an injection beam (7) runs oriented in particular substantially in the axial direction (16) of the swirl element (9) and impinges on the impact element (10).

11. SCR-exhaust gas after-treatment assembly according to any one of Claims 1 to 10, **characterised in that** the outer sleeve (11) of the swirl element (9) is used as a connecting element (3) of a SCR-catalytic converter (4) with an exhaust gas tube guide arranged upstream of the SCR-catalytic converter (4), in particular is inserted into said exhaust gas tube guide.

## Revendications

1. Système de post-traitement des gaz d'échappement SCR (1) d'un moteur à combustion interne, présentant un injecteur (5) pour l'injection d'un réducteur ainsi qu'un dispositif de mélange (8) et un catalyseur SCR (4) agencé en aval dans le sens d'écoulement des gaz d'échappement (S), dans lequel le dispositif de mélange (8) présente un élément de tourbillonnement (9), et dans lequel l'élément de tourbillonnement (9) est réalisé à partir de deux éléments de guidage agencés l'un dans l'autre et des aubes de tourbillonnement (14) sont agencées dans un élément de guidage intérieur pour générer un mouvement de tourbillonnement (D) et des aubes de tourbillonnement (13) qui génèrent un mouvement de contre-tourbillonnement (GD) sont agencées entre l'élément de guidage intérieur et l'élément de guidage extérieur, **caractérisé en ce que** le dispositif de mélange (8) présente un élément d'impact (10) monté en amont de l'élément de tourbillonnement (9) dans le sens d'écoulement des gaz d'échappement (S), dans lequel l'élément d'impact (10) est enfiché sur l'élément de tourbillonnement (9).

2. Système de post-traitement des gaz d'échappement SCR selon la revendication 1, **caractérisé en ce que** les éléments de guidage sont réalisés en tant que douille intérieure (12) et douille extérieure (11).

3. Système de post-traitement des gaz d'échappement SCR selon la revendication 1 ou 2, **caractérisé en ce que** les aubes de tourbillonnement (14) pour la génération du mouvement de tourbillonnement (D) et les aubes de tourbillonnement (13) pour la génération du mouvement de contre-tourbillonnement (GD) sont agencées l'une à côté de l'autre et/ou sensiblement à la même hauteur (h) par rapport au sens d'écoulement des gaz d'échappement (S).

4. Système de post-traitement des gaz d'échappement SCR selon l'une quelconque des revendications 1 à 3, **caractérisé en ce que** l'élément de tourbillonnement (9) est réalisé opaque dans le sens d'écoulement des gaz d'échappement (S) et/ou que l'élément de tourbillonnement (9) est réalisé d'un seul tenant et en un même matériau.

5. Système de post-traitement des gaz d'échappement SCR selon l'une quelconque des revendications 1 à 4, **caractérisé en ce que** l'ensemble des gaz d'échappement traversant l'ensemble du système de post-traitement des gaz d'échappement (1) s'écoule à travers l'élément de tourbillonnement (9).

6. Système de post-traitement des gaz d'échappement SCR selon l'une quelconque des revendications 1 à 5, **caractérisé en ce que** l'élément d'impact (10) est réalisé en tant que composant en tôle, en particulier composant de formage en tôle.

7. Système de post-traitement des gaz d'échappement SCR selon l'une quelconque des revendications 1 à 6, **caractérisé en ce que** l'élément d'impact (10) présente au moins deux surfaces d'impact (15), de préférence trois surfaces d'impact (15).

8. Système de post-traitement des gaz d'échappement SCR selon la revendication 7, **caractérisé en ce que** les surfaces d'impact (15) sont agencées tournées l'une vers l'autre dans la direction radiale (R) et coudées (α) dans le sens d'écoulement des gaz d'échappement (S).

9. Système de post-traitement des gaz d'échappement SCR selon l'une quelconque des revendications 1 à 8, **caractérisé en ce que** l'élément d'impact (10) est couplé à l'élément de tourbillonnement (9) par correspondance de matière.

10. Système de post-traitement des gaz d'échappement SCR selon l'une quelconque des revendications 1 à 9, **caractérisé en ce que** l'injecteur (5) est monté en amont de l'élément d'impact (10) de préférence dans le sens axial (16) de l'élément de tourbillonnement (9), de sorte qu'un jet d'injection (7) s'étend orienté en particulier sensiblement dans le sens axial (16) de l'élément de tourbillonnement (9) et touche l'élément d'impact (10).

11. Système de post-traitement des gaz d'échappement SCR selon l'une quelconque des revendications 1 à 10, **caractérisé en ce que** la douille extérieure (11) de l'élément de tourbillonnement (9) est utilisée en tant qu'élément de liaison (3) d'un catalyseur SCR (4) avec un guidage de tuyau de gaz d'échappement monté en amont du catalyseur SCR (4), en particulier est inséré dans celui-ci.
